Europäisches Patentamt

European Patent Office

Office européen des brevets

(19)

(11) Veröffentlichungsnummer: **0 237 841 B1**

# (12) EUROPÄISCHE PATENTSCHRIFT

(45) Veröffentlichungstag der Patentschrift: 24.07.91

(51) Int. Cl.⁵: **G06F 15/16**

(21) Anmeldenummer: 87102637.3

(22) Anmeldetag: 25.02.87

(54) **Verfahren zur Bearbeitung von Konfigurationsänderungen einer Datenverarbeitungsanlage und Vorrichtung zur Durchführung des Verfahrens.**

(30) Priorität: 21.03.86 DE 3609716

(43) Veröffentlichungstag der Anmeldung:
23.09.87 Patentblatt 87/39

(45) Bekanntmachung des Hinweises auf die
Patenterteilung:
24.07.91 Patentblatt 91/30

(84) Benannte Vertragsstaaten:
AT CH DE FR GB IT LI NL

(56) Entgegenhaltungen:
US-A- 3 812 468
US-A- 3 832 695
US-A- 4 014 005

(73) Patentinhaber: **Siemens Aktiengesellschaft**
**Wittelsbacherplatz 2**
**W-8000 München 2(DE)**

(72) Erfinder: **Bertrol, Guido, Dipl.-Ing.**
**Pramergasse 8**
**A-1090 Wien(AT)**
Erfinder: **Hrncirik, Peter, Dipl.-Ing.**
**Buchengasse 23**
**A-1100 Wien(AT)**
Erfinder: **Schebach, Gerhart**
**Rembrandstrasse 17**
**A-1020 Wien(AT)**

**Beschreibung**

In einer Datenverarbeitungsanlage werden einzelne Arbeitsabläufe mit Hilfe einer jeweils bestimmten Konfiguration von Systemteilen abgewickelt. Diese Systemteile können Peripheriegeräte, bestimmte Speicherelemente und ähnl., aber auch Programmbibliotheken, Unterprogramme und gemeinsame Datenbereiche mit in diesen gespeicherten Informationen, wie beispielsweise Zugriffsberechtigungen, sein und werden im folgenden als Funktionsmodule bezeichnet. Wird nun an einem dieser Funktionsmodule eine Änderung vorgenommen, so kann diese auch für die anderen Funktionsmodule der Konfigurationen bedeutend sein, denen das geänderte Funktionsmodul angehört. Daher darf diese Änderung nicht willkürlich und unkoordiniert ausgeführt werden. Im allgemeinen ist dazu ein Neustart der Datenverarbeitungsanlage erforderlich, durch den das geänderte Funktionsmodul mit allen anderen vom Betriebssystem übernommen und implementiert wird.

Aus den US-Patentschriften 3 812 468 und 3 812 469 ist ein Verfahren gemäß dem Oberbegriff des Patentanspruchs 1 bekannt, das die Änderung einer Konfiguration ohne Unterbrechung des Betriebes der Datenverarbeitungsanlage ermöglicht.

Nach diesem Verfahren ist nicht nur jede Abänderung an einem Funktionsmodul selbst, sondern auch eine Ergänzung der Datenverarbeitungsanlage durch technische Weiterentwicklung oder Anpassung der Leistungsfähigkeit jederzeit durchführbar. Jedes Funktionsmodul hat seine relevanten Konfigurationsdaten individuell sich abgespeichert und wird von den Änderungen verständigt. Die Zuverlässigkeit und Verfügbarkeit der Datenverarbeitungsanlage wird dadurch erhöht, daß auch der Ausfall eines Funktionsmoduls im Konfigurationsspeicher verzeichnet wird und daher kein Zugriff auf das defekte oder nicht vorhandene Funktionsmodul eingeleitet wird, der unter Umständen eine Blockierung der gesamten Datenverarbeitungsanlage zur Folge haben könnte. Der Meldungsverkehr der Steuereinrichtung wird bei diesem Verfahren dadurch entlastet, daß nur die wirklich notwendigen Änderungsmeldungen durchzuführen sind und nicht wie vor Einführung dieses Verfahrens sämtliche Funktionsmodule ständig mit Konfigurationsdaten zu versorgen sind. Die Änderung von Konfigurationen ist mit verhältnismäßig geringem Aufwand möglich, so daß eine ständige Überwachung der Zusammensetzung der einzelnen Konfigurationen und eine Verständigung aller Funktionsmodule bei Änderung entfällt.

Das bekannte Verfahren berücksichtigt aber lediglich Konfigurationsänderungen von Funktionsmodulen, die von einer zentralen Steuerung mit einem ihr zugeordneten Konfigurationsspeicher bedient werden. Zur Verbesserung der Leistungsfähigkeit von Datenverarbeitungsanlagen werden aber statt einer Steuereinrichtung mehrere dieser Steuereinrichtung entsprechende Teilsteuerungen eingesetzt.

Aufgabe der Erfindung ist es, auch in solchen Datenverarbeitungsanlagen eine Ergänzung durch technische Weiterentwicklung oder Anpassung der Leistungsfähigkeit jederzeit zu ermöglichen.

Dies wird durch das im kennzeichnenden Teil des Patentanspruches 1 in Kombination mit dem Oberbegriff beschriebene Verfahren erreicht.

Die Zuordnung einer von der wirklichen Speicheradresse unabhängigen und verschiedenen Konfigurationsdatennummer als logische Adresse einer jeden im Konfigurationsspeicher verzeichneten Konfiguration erhöht die Sicherheit des Zugriffs auf den Konfigurationsspeicher. Der Grund für diese Sicherheitserhöhung ist darin zu suchen, daß die Zugriffsadresse nicht - wie sonst oft üblich - berechnet werden muß; es gibt also keine störungsbedingte Fehlberechnung der Zugriffsadresse mehr. Eine zusätzliche Sicherung der Daten der Konfigurationsspeicher vor unerlaubtem Zugriff und Zerstörung wird durch die Umsetzung der Konfigurationsdatennummer in eine physikalische Adresse in dem entsprechenden Adreßumsetzspeicher erreicht.

Mittels dieser Maßnahmen ist die Grundlage geschaffen, eine Datenverarbeitungsanlage mit durch mehrere Teilsteuerungen erhöhter Leistungsfähigkeit mit den anfallenden Konfigurationsänderungen zu versorgen.

Es wird jeder Teilsteuerung ein eigener Konfigurationsspeicher für die durch sie verknüpften Funktionsmodule zugeordnet und von jeder Teilsteuerung für benötigte Konfigurationen aus anderen Konfigurationsspeichern die Anforderung der Änderungsinformation in den jeweiligen Konfigurationsspeichern der anderen Teilsteuerungen verzeichnet. Bei diesem Konzept der verteilten Steuerungen werden jeder Teilsteuerung bestimmte Aufgaben übertragen. Sie verwaltet dazu selbsttätig die Konfigurationen der ihr zuordenbaren Funktionsmodule und es werden dadurch überschaubare Einheiten geschaffen. Darüber hinaus ermöglicht dieses Verfahren Systemerweiterungen durch das Anfügen weiterer Datenverarbeitungsblöcke mit Teilsteuerungen und Konfigurationsspeichern verhältnismäßig problemlos durchzuführen. Da diese Teilsteuerungen aber auch gemeinsam Vorgänge bearbeiten, wird die Verständigung von der Änderung einer dabei benötigten Konfiguration dadurch gesichert, daß die Kennwerte der betroffenen Teilsteuerungen bei der jeweiligen Konfiguration im Konfigurationsspeicher verzeichnet sind. Bei Teilsteuerungen mit identischen Aufgaben werden die Konfigurationsspeicher auf identischem Inhalt gehalten und die Änderung einer Konfiguration wird in jeden dieser Konfigurationsspeicher eingetragen.

Ein gleichsam zwangsweises Bearbeiten von Konfigurationsänderungen wird dadurch erreicht, daß die Abgabe der Änderungsinformation durch das Einschreiben der neuen Konfigurationsdaten durch die Steuereinrichtung in den Konfigurationsspeicher ausgelöst wird. Werden von einem Funktionsmodul bestimmte Konfigurationen nur selten gebraucht, so ist es vorteilhaft, daß von einem Funktionsmodul, das von einer Konfiguration keine Änderungsinformation erhält, die relevanten Konfigurationsdaten bei Bedarf aus dem Konfigurationsspeicher abgefragt werden. Dadurch wird die nicht benötigte Eintragung von Änderungsinformation vermieden und die Datenverarbeitungsanlage von überflüssigem Meldungsverkehr weiter entlastet. Um insbesondere in Servicefällen und bei Neuanschlüssen eine sichere Bearbeitung von späteren Konfigurationsänderungen zu gewährleisten, wird von dem Funktionsmodul eine Anforderung der Änderungsinformation durch Abgabe eines Änderungsparameters im Konfigurationsspeicher verzeichnet.

Um die abgespeicherten Kennwerte jeder Konfiguration formal prüfen und den Konfigurationsspeicher aufgeteilt anlegen zu können, wird die Anzahl der für eine Konfiguration im Konfigurationsdatenspeicher gespeicherten Kennwerte durch ein Konfigurationsdatenformat verzeichnet.

Zur Durchführung des erfindungsgemäßen Verfahrens ist es vorteilhaft, daß die Funktionsmodule je einen Benachrichtigungsspeicher beinhalten, der mit der Steuereinrichtung zum Empfang der Änderungsinformation verbunden ist, die Funktionsmodule sind mit dem Konfigurationsspeicher und der Konfigurationsspeicher mit der Steuereinrichtung verbunden. Die Steuereinrichtung und die Funktionsmodule sind über den Adreßumsetzspeicher mit dem Konfigurationsspeicher verbunden. Dadurch kann der Konfigurationsspeicher in anderen Speicherbereichen beliebig angeordnet und verändert werden, ohne in der Steuereinrichtung und den Funktionsmodulen den Zugriff verändern zu müssen. Die Sicherheit der gespeicherten Daten wird dadurch erhöht, daß auf den Konfigurationsspeicher nicht mehr direkt zugegriffen wird.

Zur Steigerung der Leistungsfähigkeit des Gesamtsystems besteht die Steuereinrichtung aus mehreren Teilsteuerungen und jede Teilsteuerung ist mit einem eigenen Konfigurationsspeicher verbunden. Insbesondere bei identischen Teilsteuerungen ist es vorteilhaft, daß eine Verwaltungssteuerung für mindestens einen Konfigurationsspeicher zur Abfrage und/oder Änderung der Konfigurationsdaten und zur Abgabe der Änderungsinformationen vorhanden ist. Dadurch wird gewährleistet, daß der Inhalt der Konfigurationsspeicher identisch bleibt, da die Änderung einer Konfiguration in jedem dieser Konfigurationsspeicher eingetragen wird.

Der Konfigurationsspeicher ist in mehrere Konfigurationsspeicherbereiche aufgeteilt, um ihn flexibel gestalten und einfach verändern zu können. Es wird dadurch auch eine freie Gestaltung der Speicheranordnung ermöglicht.

Die Erfindung wird anhand von Ausführungsbeispielen mit Zeichnungen näher erläutert. Es zeigen:

Fig. 1    ein erstes Ausführungsbeispiel in schematischer Darstellung,

Fig. 2    ein zweites Ausführungsbeispiel in schematischer Darstellung,

Fig. 3    ein erstes Beispiel für die Organisation eines Konfigurationsspeichers und

Fig. 4    ein zweites Beispiel für die Organisation eines Konfigurationsspeichers.

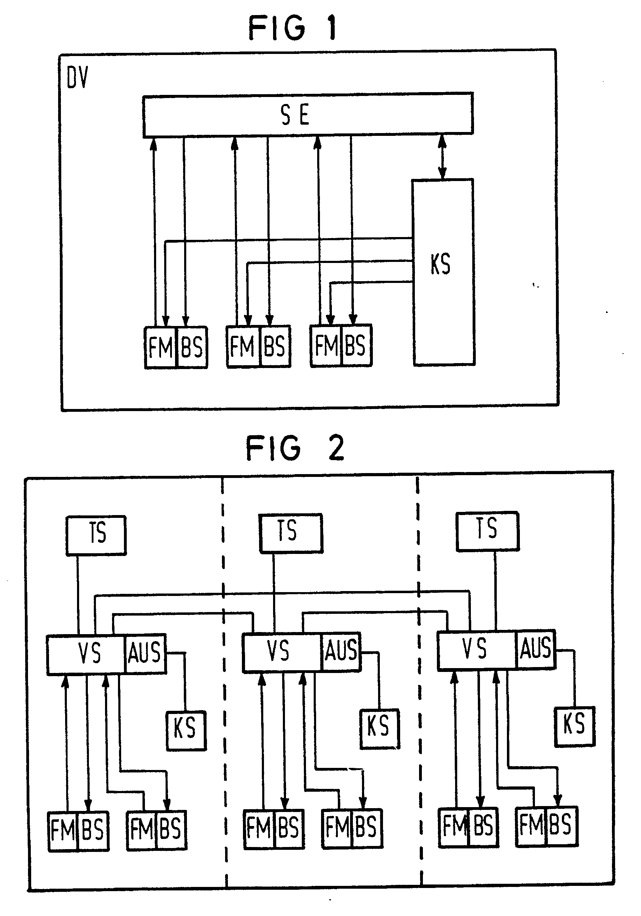

Eine in Fig. 1 dargestellte Datenverarbeitungsanlage DV enthält u. a. eine Steuereinrichtung SE und Funktionsmodule FM. Diese Steuereinrichtung SE ist beispielsweise eine Zentralprozessoreinheit, die Funktionsmodule FM sind Speicherbereiche, Programme o. ä. Der Verwaltung der für einzelne Betriebsvorgänge benötigten Konfigurationen dient ein Konfigurationsspeicher KS. Im Konfigurationsspeicher KS sind die Kennwerte der zu jeder Konfiguration gehörenden Funktionsmudule FM gespeichert, er ist als wahlfreier Zugriffsspeicher (RAM) ausgebildet. Wird nun eine Konfiguration von außen durch eine Bedienungsperson beispielsweise durch Hinzufügen oder Abschalten eines Funktionsmoduls FM geändert, so wird mit Hilfe der Steuereinrichtung SE der entsprechende Kennwert im Kommunikationsspeicher KS geändert. Dieser Schreibbefehl löst die Abgabe einer Änderungsinformation aus, die von der Steuereinrichtung SE in Benachrichtigungsspeicher BS der betroffenen Funktionsmodule FM eingeschrieben wird. Dadurch können die relevanten Konfigurationsdaten vom Funktionsmodul FM direkt gespeichert werden, was insbesondere dann vorteilhaft ist, wenn die Konfigurationsdaten oft benötigt, aber im Verhältnis dazu selten geändert werden. Die Benachrichtigungsspeicher BS sind wahlfreie Zugriffsspeicher (RAMs). Eine Sicherheitseinrichtung kann den Ausfall eines Funktionsmoduls FM, eventuell unter Abspeicherung des Ausfallgrundes, im Konfigurationsspeicher verzeichnen.

Dadurch ist sichergestellt, daß eine Konfigurationsänderung nicht unkoordiniert vorgenommen wird. Mit Hilfe der Änderungsinformation im Benachrichtigungsspeicher BS des Funktionsmoduls FM wird die Steuerung des Zugriffs auf das geänderte Funktionsmodul FM berichtigt und den tatsächlichen Gegebenheiten angepaßt. Für Fälle, in denen Konfigurationsdaten oft geändert, aber nur selten gebraucht werden, wird dieser unnötige Meldungsverkehr vermieden, wenn von den Funktionsmodulen FM die Kennwerte einer Konfiguration auch direkt aus dem Konfigurationsspeicher KS ausgelesen werden können. Dieser Lesebefehl ermöglicht es dem Funktionsmodul FM, durch Angabe eines Änderungsparameters auch eine Anforderung für Änderungsinformation im Konfigurationsspeicher KS direkt zu verzeichnen.

Das zweite Ausführungsbeispiel, eine rechnergesteuerte Fernsprechvermittlungsanlage FVA, ist in Fig. 2 dargestellt. Sie entspricht im Prinzip der Datenverarbeitungsanlage DV des ersten Ausführungsbeispieles, die Steuereinrichtung SE besteht aber zur Leistungssteigerung und Aufgabenteilung aus mehreren Teilsteuerungen TS. Bei einem Neustart nach Änderung eines Funktionsmoduls FM wären besonders viele Konfigurationsdaten abzuspeichern und es kommt der erfindungsgemäßen Bearbeitung von Konfigurationsänderungen daher besondere Bedeutung zu, da dann nur die wirklich notwendigen Änderungsinformationen weiterzuleiten sind. Darüber hinaus wird der notwendige Meldungsverkehr weiter verringert, da jede Teilsteuerung TS die Konfigurationen der ihr zugeordneten und von ihr überwiegend verwendeten Funktionsmodule FM verwaltet.

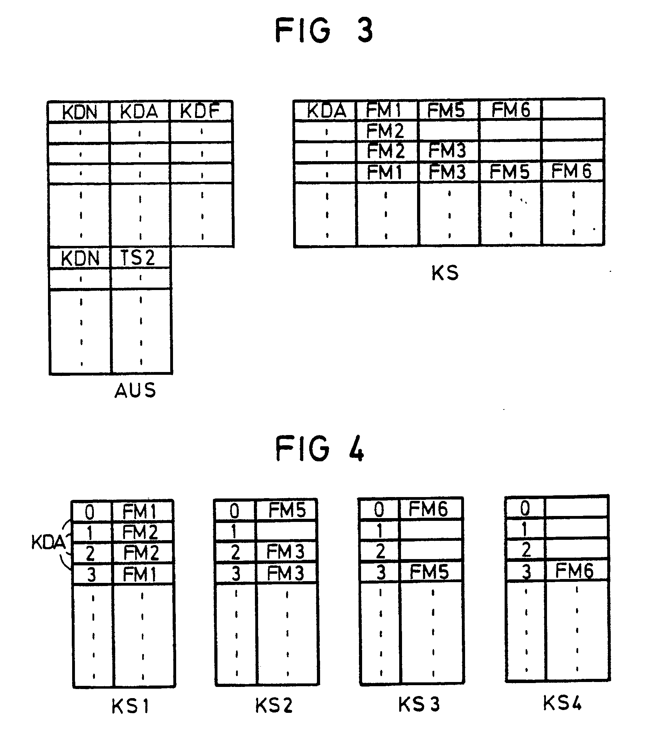

Die Bearbeitung der Konfigurationsänderungen wird für jede Teilsteuerung TS von einer eigenen Verwaltungssteuerung VS übernommen. Es wird auf jeden Konfigurationsspeicher KS zur Sicherheit der Konfigurationsdaten über einen Adreßumsetzspeicher AUS zugegriffen. Jeder Konfiguration entspricht eine Konfigurationsdatennummer KDN (Fig. 3). Sie ist als logische Adresse festgelegt und wird nicht, beispielsweise in Programmschleifen, berechnet. Greift nun die Verwaltungssteuerung VS auf den Konfigurationsspeicher KS zu, so wird die Konfigurationsdatennummer KDN im Adreßumsetzspeicher AUS in die entsprechende Speicherplatzadresse des Konfigurationsspeichers KS umgesetzt. Sind die Kennwerte einer Konfiguration bei einer anderen Teilsteuerung TS gespeichert, so ist deren Nummer unter der Konfigurationsdatennummer KDN im Adreßumsetzspeicher AUS verzeichnet und der Zugriff wird zum Verständigungsspeicher VS der entsprechenden Teilsteuerung TS weitergeleitet. Falls ein Funktionsmodul FM einer anderen Teilsteuerung TS Bestandteil einer Konfiguration ist, wird im Konfigurationsspeicher KS die entsprechende Verwaltungssteuerung VS als Kennwert verzeichnet und eine Änderungsinformation über sie an den Benachrichtigungsspeicher BS geschickt.

In der Fernsprechvermittlungsanlage FVA können mehrere Teilsteuerungen TS zur Bearbeitung gleicher Aufgaben eingesetzt sein. In diesem Fall müssen die jeweiligen Konfigurationsspeicher KS den gleichen Inhalt haben. Daher wird eine Konfigurationsänderung in all diesen Konfigurationsspeichern KS vorgenommen. Zu diesem Zweck kann auch eine eigene Steuerung zur Konfigurationsdatenverwaltung eingesetzt werden. Es werden von ihr Anforderungen von Änderungsmeldungen in den einzelnen Konfigurationsspeichern KS eingerichtet, so daß bei Konfigurationsänderungen im Bereich einer dieser Teilsteuerungen TS über die Konfigurationsdatenverwaltung die übrigen identischen Teilsteuerungen TS benachrichtigt werden. Eine derartige Änderungsinformation wird bevorzugt bearbeitet.

Fig. 3 zeigt einen beispielhaften Aufbau des Adreßumsetzspeichers AUS und des dazugehörigen Konfigurationsspeichers KS. Die Konfigurationsdatennummer KDN wird in die Konfigurationsdatenadresse KDA umgesetzt, der auch noch ein Konfigurationsdatenformat KDF zugeordnet ist. Das Konfigurationsdatenformat KDF gibt Art und Anzahl der zur Konfigurationsdatennummer KDN gehörenden Kennwerte an. Durch die Formatprüfung ist es damit auch den Funktionsmodulen FM möglich, die formale Richtigkeit einer gespeicherten Konfiguration zu überprüfen und falsch bearbeitete Änderungen zu entdecken. Bei Konfigurationsdatennummern KDN, deren Daten im Bereich anderer Teilsteuerungen TS gespeichert sind, ist deren Nummer gleichfalls im Adreßumsetzspeicher AUS gespeichert. Der Konfigurationsdatenspeicher KS ist matrixartig aufgebaut und jede Zeile entspricht einer Konfiguration. Die Kennwerte der einzelnen Funktionsmodule FM sind hintereinander verzeichnet.

Eine weitere Möglichkeit des Aubaues des Konfigurationsspeichers KS zeigt Fig. 4. Dabei sind die Kennwerte jeder Konfiguration spaltenweise in eigenen Konfigurationsspeicherbereichen KS1 bis KS4 verzeichnet. Das ermöglicht eine flexiblere Gestaltung des Konfigurationsspeichers KS, erleichtert insbesondere seine allfällige spätere Erweiterung durch einfaches Anhängen neuer Konfigurationsspeicherbereiche und eine Optimierung der Zugriffsgeschwindigkeit auf die einzelnen Kennwerte.

Wie die Ausführungsbeispiele zeigen, erlaubt das erfindungsgemäße Verfahren zur Änderung von Konfigurationen unter Zuhilfenahme von Konfigurationsdatennummern KDN eine besonders effektive Nutzung von Datenverarbeitungsanlagen DV mit modularer Systemarchitektur. Änderungen einzelner Konfigurationen sind auch während des Betriebes möglich, eine Abgabe von Schadensmeldungen durch die Funktionsmodule FM ermöglicht sogar ein Reagieren der Datenverarbeitungsanlage DV auf derartige Zwischenfälle. Dadurch wird die Betriebssicherheit noch weiter erhöht. Die Verwendung der Konfigurationsdatennummern KDN ermöglicht eine freie Gestaltung des Aufbaus der Speicherbereiche der Datenverarbeitungsanlage DV. Da die Steuereinrichtung SE und die Funktionsmodule FM nur mit einer Konfigurationsdatennummer KDN auf den Konfigurationsspeicher KS zugreifen, ist es für sie unerheblich, wo sich dieser Konfigurationsspeicher KS tatsächlich befindet und wie die Datenverarbeitungsanlage DV tatsächlich aufgebaut ist. Somit werden für Systemwartung und -änderung überschaubare Einheiten geschaffen, wodurch Betriebskosten gesenkt werden und eine technische Weiterentwicklung einer bereits bestehenden Datenverarbeitungsanlage DV durchgeführt werden kann.

**Patentansprüche**

1. Verfahren zur Änderung von Konfigurationen einer Datenverarbeitungsanlage (DV) mit einer aus mindestens einer Teilsteuereinrichtung bestehenden Steuereinrichtung (SE) und modularer Systemarchitektur, wobei Funktionsmodule (FM) zu einzelnen Konfigurationen verknüpft sind, die jeweils für bestimmte Arbeitsabläufe der Datenverarbeitungsanlage (DV) eingesetzt werden, die-sen Funktionsmodulen in einem Konfigurationsspeicher (KS) konfigurationsspezifisch eingetragene Kennwerte zugeordnet sind, die bei einer Konfigurationsänderung im Konfigurationsspeicher entsprechend geändert werden und von der Steuereinrichtung (SE) durch Abfrage des Konfigurationsspeichers (KS) die von der Konfigurationsänderung betroffenen Funktionsmodule (FM) festgestellt und Änderungsinformationen an diese Funktionsmodule (FM) abgegeben werden,
**dadurch gekennzeichnet,**
daß jeder dieser Konfigurationen eine Konfigurationsdatennummer (KDN) in Form einer logischen Adresse zugeordnet ist, daß vor jedem Zugriff auf den Konfigurationsspeicher (KS) die Konfigurationsdatennummer (KDN) mittels eines Adreßumsetzspeichers (AUS) in eine Konfigurationsdatenadresse (KDA) als physikalische Adresse der entsprechenden Konfiguration im Konfigurationsspeicher (KS) umgesetzt wird, daß jeder Teilsteuerung (TS) ein eigener Konfigurationsspeicher (KS) für die durch sie verknüpfbaren Funktionsmodule (FM) zugeordnet ist und von jeder Teilsteuerung (TS) für benötigte Konfigurationen aus anderen Konfigurationsspeichern (KS) die Anforderung der Änderungsinformation in den jeweiligen Konfigurationsspeichern (KS) der anderen Teilsteuerungen (TS) verzeichnet wird.

2. Verfahren nach Anspruch 1,
**dadurch gekennzeichnet,** daß die Abgabe der Änderungsinformation durch das Einschreiben der neuen Konfigurationsdaten mittels der Steuereinrichtung (SE) in den Konfigurationsspeicher (KS) ausgelöst wird.

3. Verfahren nach Anspruch 1 oder 2,
**dadurch gekennzeichnet,** daß von einem Funktionsmodul (FM), das von einer Konfiguration keine Änderungsinformation erhält, die relevanten Konfigurationsdaten bei Bedarf aus dem Konfigurationsspeicher (KS) abgefragt werden.

4. Verfahren nach Anspruch 1 oder 2,
**dadurch gekennzeichnet,** daß von dem Funktionsmodul (FM) eine Anforderung der Änderungsinformation durch Abgabe eines Änderungsparameters im Konfigurationsspeicher (KS) verzeichnet wird.

5. Verfahren nach Anspruch 1,
**dadurch gekennzeichnet,** daß die Anzahl der für eine Konfiguration im Konfigurationsdatenspeicher (KS) gespeicherten Kennwerte durch ein Konfigurationsdatenformat (KDF) verzeichnet wird.

6. Verfahren nach Anspruch 1,
**dadurch gekennzeichnet,** daß in identischen Teilsteuerungen (TS) die Konfigurationsspeicher (KS) auf identischem Inhalt gehalten werden und die Änderung einer Konfiguration in jeden dieser Konfigurationsspeicher (KS) eingetragen wird.

7. Vorrichtung zur Durchführung des Verfahrens nach einem der Ansprüche 1 bis 6, worin die Funktionsmodule (FM) je einen Benachrichtigungsspeicher (BS) beinhalten, der mit der Steuereinrichtung (SE) zum Empfang der Änderungsinformation, das Funktionsmodul (FM) aber mit dem Konfigurationsspeicher (KS) und der Konfigurationsspeicher (KS) mit der Steuereinrichtung (SE) verbunden ist,
**dadurch gekennzeichnet,** daß die Steuereinrichtung (SE) und die Funktionsmodule (FM) über den Adreßumsetzspeicher (AUS) mit dem Konfigurationsspeicher (KS) verbunden sind, daß die Steuereinrichtung (SE) aus mehreren Teilsteuerungen (TS) besteht und jede Teilsteuerung (TS) mit einem eigenen Konfigurationsspeicher (KS) verbunden ist, und daß eine Verwaltungssteuerung (VS) für mindestens einen Konfigurationsspeicher (KS) zur Abfrage und/oder Änderung der Konfigurationsdaten und zur Abgabe der Änderungsinformationen vorhanden ist.

8.  Vorrichtung nach Anspruch 7,
    **dadurch gekennzeichnet**, daß der Konfigura-
    tionsspeicher (KS) in mehrere Konfigurations-
    speicherbereiche (KS1,KS2,.....) aufgeteilt ist.

**Claims**

1.  Method for modifying configurations of a data
    processing system (DV) comprising a control
    device (SE) consisting of at least one subcontrol device and modular system architecture, in
    which method function modules (FM) are combined to form individual configurations which
    are in each case used for particular work sequences of the data processing system (DV),
    characteristic values entered configuration-specifically in a configuration memory (KS) are
    allocated to these function modules, which
    characteristic values, with a configuration
    modification, are correspondingly modified in
    the configuration memory and the function
    modules (FM) affected by the configuration
    modification are determined by the control device (SE) by interrogating the configuration
    memory (KS) and modification information is
    output to these function modules (FM), characterised in that a configuration data number
    (KDN) in the form of a logic address is allocated to each of these configurations, in that,
    before each access of the configuration memory (KS), the configuration data number (KDN)
    is converted by means of an address conversion memory (AUS) into a configuration data
    address (KDA) as physical address of the corresponding configuration in the configuration
    memory (KS), in that to each subcontroller
    (TS) a separate configuration memory (KS) is
    allocated for the function modules (FM) which
    it can combine and, for required configurations
    from other configuration memories (KS), every
    subcontroller (TS) registers the request for
    modification information in the respective configuration memories (KS) of the other subcontrollers (TS).

2.  Method according to Claim 1, characterised in
    that the output of the modification information
    is triggered by the writing-in of the new configuration data by means of the control device
    (SE) into the configuration memory (KS).

3.  Method according to Claim 1 or 2, characterised in that, if necessary, the configuration
    memory (KS) is interrogated for the relevant
    configuration data by a function module (FM)
    which does not receive any modification information of a configuration.

4.  Method according to Claim 1 or 2, characterised in that a request for the modification
    information for output of a modification parameter is registered in the configuration memory
    (KS) by the function module (FM).

5.  Method according to Claim 1, characterised in
    that the number of the characteristic values
    stored for a configuration in the configuration
    memory (KS) is registered by a configuration
    data format (KDF).

6.  Method according to Claim 1, characterised in
    that, in identical subcontrollers (TS) the configuration memories (KS) are kept to identical
    content and the modification of a configuration
    is entered in each of these configuration
    memories (KS).

7.  Device for carrying out the method according
    to one of Claims 1 to 6, in which the function
    modules (FM) each contain a notification memory (BS) which is connected to the control
    device (SE) for receiving the modification information, but the function module (FM) is connected to the configuration memory (KS) and
    the configuration memory (KS) is connected to
    the control device (SE), characterised in that
    the control device (SE) and function modules
    (FM) are connected to the configuration memory (KS) via the address conversion memory
    (AUS), in that the control device (SE) consists
    of several subcontrollers (TS) and each subcontroller (TS) is connected to a separate configuration memory (KS), and in that a management control (VS) for at least one configuration
    memory (KS) for interrogation and/or modification of the configuration data and for the output
    of the modification information exists.

8.  Device according to Claim 7, characterised in
    that the configuration memory (KS) is divided
    into several configuration memory areas (KS1,
    KS2,....).

**Revendications**

1.  Procédé pour modifier des configurations
    d'une installation de traitement de données
    (DV) comportant un dispositif de commande
    (ST) constitué par au moins un dispositif de
    commande partielle, et une architecture modulaire du système, des modules fonctionnels
    (FM) étant combinés pour former différentes
    configurations qui sont utilisées respectivement
    pour des cycles déterminés de travail de l'installation de traitement de données (DV), et
    selon lequel à ces modules fonctionnels sont associées des valeurs caractéristiques, qui sont introduites, d'une manière spécifique en fonction de la configuration, dans une mémoire de configurations (KS) et qui, dans le cas d'une modification de la configuration, sont modifiées de façon correspondante dans la mémoire de configurations et, les modules fonctionnels (FM) concernés par la modification de configuration étant déterminés par le dispositif de commande (SE) par interrogation de la mémoire de configurations (KS) et des informations de modification étant envoyées à ces modules fonctionnels (FM),
caractérisé par le fait qu'un numéro de données de configurations (KDN) se présentant sous la forme d'une adresse logique est associé à chacune de ces configurations, qu'avant chaque accès à la mémoire de configurations (KS), le numéro de données de configurations (KDN) est converti, au moyen d'une mémoire de conversion d'adresses (AUS), en une adresse de données de configurations (KDA), en tant qu'adresse physique de la configuration correspondante dans la mémoire de configurations (KS), qu'à chaque unité de commande partielle (TS) est associée une mémoire particulière de configurations (KS) pour le module fonctionnel (FM) pouvant être combiné par cette unité et que chaque unité de commande partielle (TS) enregistre, pour des configurations nécessaires à partir d'autres mémoires de configurations (KS), la demande de l'information de modification, dans les mémoires respectives de configurations (KS) des autres unités de commande partielle (TS).

2. Procédé suivant la revendication 1, caractérisé par le fait que la délivrance de l'information de modification est déclenchée par l'enregistrement des nouvelles données de configurations, au moyen du dispositif de commande (SE), dans la mémoire de configurations (KS).

3. Procédé suivant la revendication 1 ou 2, caractérisé par le fait que les données importantes de configuration sont interrogées le cas échéant à partir de la mémoire de configurations (KS), par un module fonctionnel (FM) qui ne reçoit aucune information de modification de la part d'une configuration.

4. Procédé suivant la revendication 1 ou 2, caractérisé par le fait que le module fonctionnel (FM) enregistre une demande de l'information de modification au moyen de la délivrance d'un paramètre de modification dans la mémoire de configurations (KS).

5. Procédé suivant la revendication 1, caractérisé par le fait que le nombre des valeurs caractéristiques mémorisées pour une configuration dans la mémoire de données de configurations (KS) est enregistré au moyen d'un format de données de configurations (KDF).

6. Procédé suivant la revendication 1, caractérisé par le fait que dans des unités identiques de commande partielle (TS), un même contenu est conservé dans les mémoires de configurations (KS), et la modification d'une configuration est introduite dans chacune de ces mémoires de configurations (KS).

7. Dispositif pour la mise en oeuvre du procédé suivant l'une des revendications 1 à 6, dans lequel les modules fonctionnels (FM) contiennent chacun une mémoire d'avertissements (BS) qui est raccordée au dispositif de commande (SE) pour la réception de l'information de modification, tandis que le module fonctionnel (FM) est raccordé à la mémoire de configurations (KS) et que cette dernière est raccordée au dispositif de commande (SE), caractérisé par le fait que le dispositif de commande (SE) et les modules fonctionnels (FM) sont reliés au moyen de la mémoire de conversions d'adresses (AUS) à la mémoire de configurations (KS), que le dispositif de commande (SE) est constitué par plusieurs unités de commande partielle (TS) et que chaque unité de commande partielle (TS) est raccordée à une mémoire particulière de configurations (KS), et qu'une unité de commande de gestion (VS) pour au moins une mémoire de configurations (KS) est prévue pour la délivrance et/ou la modification des données de configurations et pour la délivrance des informations de modification.

8. Dispositif suivant la revendication 7, caractérisé par le fait que la mémoire de configurations (KS) est subdivisée en plusieurs zones (KS1,KS2,...) de la mémoire de configurations.

## FIG 1

## FIG 2

# FIG 3

| KDN | KDA | KDF |
|-----|-----|-----|
| ¦ | ¦ | ¦ |
| ¦ | ¦ | ¦ |
| ¦ | ¦ | ¦ |
| ¦ | ¦ | ¦ |
| ¦ | ¦ | ¦ |

| KDA | FM1 | FM5 | FM6 | |
|-----|-----|-----|-----|---|
| ¦ | FM2 | | | |
| ¦ | FM2 | FM3 | | |
| ¦ | FM1 | FM3 | FM5 | FM6 |
| ¦ | ¦ | ¦ | ¦ | ¦ |
| ¦ | ¦ | ¦ | ¦ | ¦ |
| ¦ | ¦ | ¦ | ¦ | ¦ |

KS

| KDN | TS2 |
|-----|-----|
| ¦ | ¦ |
| ¦ | ¦ |
| ¦ | ¦ |
| ¦ | ¦ |

AUS

# FIG 4

| 0 | FM1 |
|---|-----|
| 1 | FM2 |
| 2 | FM2 |
| 3 | FM1 |
| ¦ | ¦ |
| ¦ | ¦ |
| ¦ | ¦ |

KDA

KS1

| 0 | FM5 |
|---|-----|
| 1 | |
| 2 | FM3 |
| 3 | FM3 |
| ¦ | ¦ |
| ¦ | ¦ |
| ¦ | ¦ |

KS2

| 0 | FM6 |
|---|-----|
| 1 | |
| 2 | |
| 3 | FM5 |
| ¦ | ¦ |
| ¦ | ¦ |
| ¦ | ¦ |

KS3

| 0 | |
|---|-----|
| 1 | |
| 2 | |
| 3 | FM6 |
| ¦ | ¦ |
| ¦ | ¦ |
| ¦ | ¦ |

KS4